**Europäisches Patentamt**

(19) **European Patent Office**

**Office européen des brevets**

(11) Veröffentlichungsnummer: **0 028 581**
**B1**

(12) # EUROPÄISCHE PATENTSCHRIFT

(45) Veröffentlichungstag der Patentschrift:
**22.02.84**

(51) Int. Cl.³: **G 01 C 15/00**

(21) Anmeldenummer: **80810320.4**

(22) Anmeldetag: **23.10.80**

(54) Anordnung zur Geländevermessung mit einem elektronischen Tachymeter.

(30) Priorität: **23.10.79 DD 216387**

(43) Veröffentlichungstag der Anmeldung:
**13.05.81 Patentblatt 81/19**

(45) Bekanntmachung des Hinweises auf die Patenterteilung:
**22.02.84 Patentblatt 84/8**

(84) Benannte Vertragsstaaten:
**CH DE LI SE**

(56) Entgegenhaltungen:
**EP - A - 0 007 886**
**DE - A - 2 756 364**

**ZEISS-INFORMATIONEN, Band 20, Heft 80, August 1972, Oberkochen, DE, R. BORNEFELD: Die Aufgaben der Elektronik im Reg Elta 14″, Seiten 24-27**
**ZEISS-INFORMATIONEN, Band 25, Heft 91, September 1980, Oberkochen, DE, R. BORNEFELD: ″Das Zeiss Elta 2, ein mikroprozessorgesteuertes Computertachymeter″, Seiten 46-51**

(73) Patentinhaber: **Jenoptik Jena G.m.b.H.,
Carl-Zeiss-Strasse 1, DDR-6900 Jena (DD)**

(84) Benannte Vertragsstaaten: **DE**

(73) Patentinhaber: **VEB Carl Zeiss Jena,
Carl-Zeiss-Strasse 1, DDR-6900 Jena (DD)**

(84) Benannte Vertragsstaaten: **CH LI SE**

(72) Erfinder: **Meyl, Wolfgang, Mühlbacher Strasse 1,
8021 Dresden (DD)**
Erfinder: **Hentschel, Peter, Mönchsholz 12,
8051 Dresden (DD)**

(74) Vertreter: **Bovard, Fritz Albert et al, Bovard AG
Patentanwälte VSP Optingenstrasse 16,
CH-3000 Bern 25 (CH)**

## Anordnung zur Geländevermessung mit einem elektronischen Tachymeter

Die Erfindung betrifft eine Anordnung zur Geländevermessung mit einem elektronischen Tachymeter, einem Informationsanalysator zur Aufbereitung der im Tachymeter gewonnenen Meßwerte und einer Sende/Empfangseinrichtung zur Weitergabe der aufbereiteten Meßwerte an einen Datenspeicher oder einem Informationskomplettierer zur Aufbereitung und Weitergabe der aufbereiteten Meßwerte an einen Datenspeicher.

Die Anwendung der Erfindung ist insbesondere bei der Tachymeteraufnahme für Karten in großem Maßstab und für die Erzeugung digitaler Geländemodelle zweckmäßig.

Für die Kartenherstellung oder die Erzeugung eines digitalen Geländemodelles werden außer metrischen Informationen (Winkel und Strecken) auch semantische Informationen (z. B. beschreibende Informationen über die Art des aufgenommenen Punktes, seine Beziehung zu anderen Punkten und zur Umgebung) benötigt. Die semantischen Informationen können bei der Tachymeteraufnahme nur vom Menschen im Gelände erkannt werden. Für eine automatische Weiterverarbeitung müssen sie in digitaler Form vorliegen.

Die metrischen Informationen können bereits mit einem hohen Automatisierungsgrad in digitaler Form erfaßt werden.

Diese Feststellung trifft nicht in gleicher Weise für die semantischen Informationen zu. Es ist bekannt, daß bei der automatischen Registrierung der mit elektronischem Tachymeter gemessenen Werte zusätzlich bestimmte Kodezahlen zur Erfassung gewisser semantischer Informationen am Tachymeter über eine Tastatur eingegeben und auf einem maschinenlesbaren Datenträger registriert werden können. Vom Tachymeterstandpunkt kann aber oft nur ein begrenzter Geländebereich eingesehen werden, der wesentlich kleiner als das auf Grund der Reichweite des elektronischen Tachymeters zu überstreichende Gebiet ist. Zweifelsfreie semantische Informationen können im allgemeinen am besten am Reflektorstandpunkt bzw. in seiner Nähe selbst ermittelt werden.

In der EP-A-0 007 886 (Stand der Technik nach Art 54(3)(4) EPü) wird ein Verfahren zur Messung der Relativlage zwischen einem ersten und mindestens einem zweiten Punkt mit Übertragung elektromagnetischer Wellen zwischen den Punkten, sowie Einrichtungen zur Durchführung des Verfahrens beschrieben. Dieses Verfahren erfordert noch einen hohen manuellen Aufwand für das Heraussuchen, Zuordnen und Eingeben der erhaltenen Daten, wobei eine eindeutige Zuordnung der Werte zu dem mnemonischen, alphanumerischen Kode nicht immer gegeben ist.

Es ist eine Aufgabe der Erfindung, die Geländeaufnahme mit automatischem Tachymeter zu vereinfachen und wirkungsvoller zu gestalten. Im weiteren soll eine Meßanordnung mit elektronischem Tachymeter geschaffen werden, die es ermöglicht, daß bei der Geländeaufnahme die semantischen Informationen an jeder beliebigen Stelle in der Örtlichkeit digital erfaßt und gleich den metrischen Informationen aufgemessener Punkte zugeordnet werden können. Dies wird bei einer Anordnung der eingangs genannten Art erfindungsgemäß durch die kennzeichnenden Merkmale des Patentanspruches 1 erzielt.

Die Erfindung geht von der Erkenntnis aus, daß eine beschleunigte Tachymeteraufnahme und eine Senkung der Fehlerquote beim Erfassen digitalisierter semantischer Informationen möglich sein wird, wenn der Meßtruppleiter bei freier Bewegung im Gelände die Aufnahmeregie übernehmen und die gesamte Datenregistrierung auslösen kann.

Die erfindungsgemäße Meßanordnung besteht aus einem elektronischen Tachymeter, vorzugsweise mit automatischer Meßwerterfassung, einem Informationsanalysator oder einem Informationskomplettierer, einer Übertragungs- und Empfangsvorrichtung, einer zentralen Station mit Datenverarbeitungsanlage oder einem Datenspeicher und einem erfindungsgemäßen mnemonischen Kompilator für semantische Informationen gemäß dem Anspruch 1. Der mnemonische Kompilator (Übersetzer), ein elektronisches Taschengeät für den mobilen Feldeinsatz, besitzt eine Tastenmatrix, über die jeweils eine Deckfolie mit formatgleicher Symbolmatrix geschoben werden kann. Die Symbole können nach mnemonischen (verschlüsselten) Gesichtspunkten z. B. speziell für die Kartenherstellung in großem Maßstab bzw. für die Erzeugung eines digitalen Geländemodells zusammengestellt werden. Jede Deckfolie besitzt eine Kodierleiste mit der Deckfoliennummer, die über einen Fotoabtaster automatisch erfaßt und gespeichert wird. Mit verschiedenen Deckfolien läßt sich ein großer Symbolvorrat schaffen. Die Symbole können ganz verschiedene Bedeutung haben (z. B. Kartenzeichen oder Regieanweisungen für einen Kartierautomaten). Jedem Symbol wird eindeutig die Zeilen- und Spaltennummer des Elementes der Tasten- bzw. Symbolmatrix zugeordnet. Beim Druck auf ein bestimmtes Symbol bzw. auf die darunter befindliche Taste werden die Zeilen- und Spaltennummern automatisch gespeichert und in einer Ziffernanzeige sichtbar gemacht, so daß eine Sofortkontrolle möglich wird. Über eine Zehnertastatur können für Aufnahmepunkte Nummern eingegeben werden, die ebenfalls gespeichert werden und zur Anzeige kommen. Über die Tastaturen können also Kodeworte aufgebaut werden, welche semantische Information in digitaler Form darstellen. Jedes Kodewort wird im mnemonischen Kompilator gespeichert (z. B. auf Festkörperspeicher) oder so aufbereitet, daß es als Folge impulslängenmodulierter Niederfrequenzsignale mittels der Übertragungsvorrichtung (z. B. Funksprechgerät) an die Empfangsvorrichtung (z. B. Funksprechgerät) weitergeleitet werden kann.

Die Empfangsvorrichtung befindet sich in der zentralen Station oder am Tachymeterstandort. Die mit dem elektronischen Tachymeter ermittelte metrische Information wird entweder im Informationsanalysator so aufbereitet, daß sie auch als Folge längenmodulierter Niederfrequenzsignale mittels einer Übertragungsvorrichtung an die zentrale Station übertragen werden kann, oder sie wird im Informationskomplettierer zwischengespeichert und mit der von der Empfangsvorrichtung an den Informationskomplettierer weitergegebenen semantischen Information verknüpft und dann im Datenspeicher auf maschinenlesbarem Datenträger gespeichert. In der zentralen Station können die metrische und semantische Information z. B. auf einem Kartierautomaten sofort verarbeitet werden.

Mit dem mnemonischen Kompilator kann der Meßtruppleiter sich frei in der Örtlichkeit, insbesondere in der Nähe des Reflektorstandpunktes, bewegen und im Anblick des Geländes die semantischen Informationen (wie z. B. Art des aufzunehmenden Punktes und seine Beziehungen zu anderen Meßpunkten und zur Umgebung) feststellen und diese sofort in digitaler Form unmittelbar oder nach Fernübertragung zur Abspeicherung bringen.

Die erfindungsgemäße Meßanordnung mit elektronischem Tachymeter und mnemonischem Kompilator für semantische Informationen wird nachstehend an Hand von Ausführungsbeispielen näher erläutert.

In der zugehörigen schematischen Zeichnung zeigt

Fig. 1 die schematische erste Meßanordnung M1,

Fig. 2 die schematische zweite Meßanordnung M2,

Fig. 3 den mnemonischen Kompilator in einer möglichen äußeren Form,

Fig. 4 das schematische Blockschaltbild des mnemonischen Kompilators und

Fig. 5 des schematische Blockschaltbild des Informationskomplettierers.

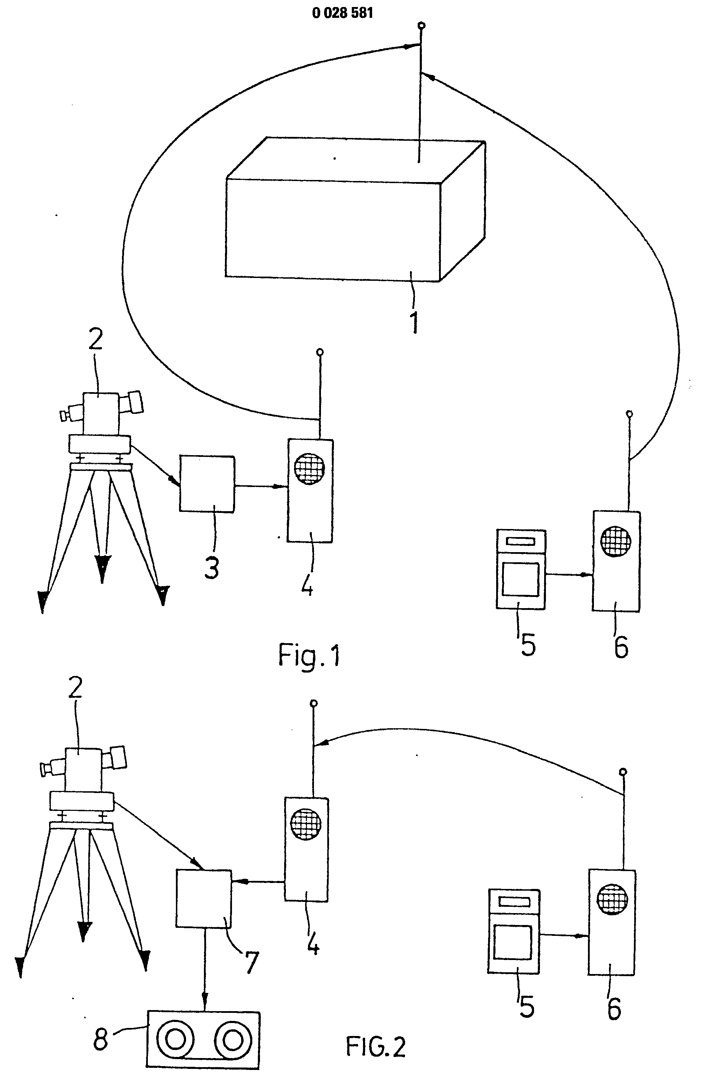

Die erste Meßanordnung besteht gemäß Fig. 1 aus einer zentralen Station 1 für den Empfang und die Verarbeitung von Daten, einem elektronischen Tachymeter 2, einem Informationsanalysator 3, einem ersten Funksprechgerät 4, einem erfindungsgemäßen mnemonischen Kompilator 5 für semantische Informationen und einem zweiten Funksprechgerät 6.

Bei der ersten Meßanordnung wird mit dem elektronischen Tachymeter 2 für jeden Aufnahmepunkt die metrische Information (Richtungswinkel, Zenitwinkel und Strecke) erfaßt. Diese Information wird im Informationsanalysator 3 so aufbereitet, daß sie als Folge von impulslängenmodulierten Niederfrequenzsignalen mittels des ersten Funksprechgeräts 4 an die zentrale Station 1 gesendet werden kann. Mit dem mnemonischen Kompilator 5 wird die zu jeder metrischen Information gehörende semantische Information in ein Kodewort umgesetzt. Dieses Kodewort wird im mnemonischen Kompilator 5 ebenfalls so aufbereitet, daß es als Folge impulslängenmodulierter Niederfrequenzsignale mittels des zweiten Funksprechgeräts 6 an die zentrale Station 1 gesendet werden kann. In der zentralen Station 1 werden die metrische und semantische Information empfangen und zwecks Weiterverarbeitung aufbereitet. Die zentrale Station 1 kann z. B. im mobilen Einsatz ein Containerfahrzeug mit installierter Datenverarbeitungsanlage und einem Kartierautomaten sein. Mit der zentralen Station 1 können bei Geländeaufnahmen großen Umfangs analog der ersten Meßanordnung M1 mehrere elektronische Tachymeter in Verbindung stehen.

Die in Fig. 2 dargestellte zweite Meßanordnung besteht aus dem elektronischen Tachymeter 2, einem Informationskomplettierer 7, dem ersten Funksprechgerät 4, einem Datenspeicher 8, dem erfindungsgemäßen mnemonischen Kompilator 5 für semantische Informationen und dem zweiten Funksprechgerät 6.

Bei der zweiten Meßanordnung wird die metrische Information mit dem elektronischen Tachymeter 2 erfaßt und an den Informationskomplettierer 7 übertragen und in ihm zwischengespeichert. Di semantische Information wird genauso erfaßt, aufbereitet und gesendet wie bei der ersten Meßanordnung.

Vom zweiten Funksprechgerät 6 gelangt aber die Signalfolge jetzt über das erste Funksprechgerät 4 an den Informationskomplettierer 7, von dem aus die Übertragung der zusammengestellten metrischen und semantischen Informationen zum Datenspeicher 8 erfolgt. Im Datenspeicher 8 wird die verknüpfte Information auf maschinenlesbarem Datenträger (z. B. Lochstreifen oder Magnetband oder Festkörperspeicher) zwecks späterer Verarbeitung gespeichert.

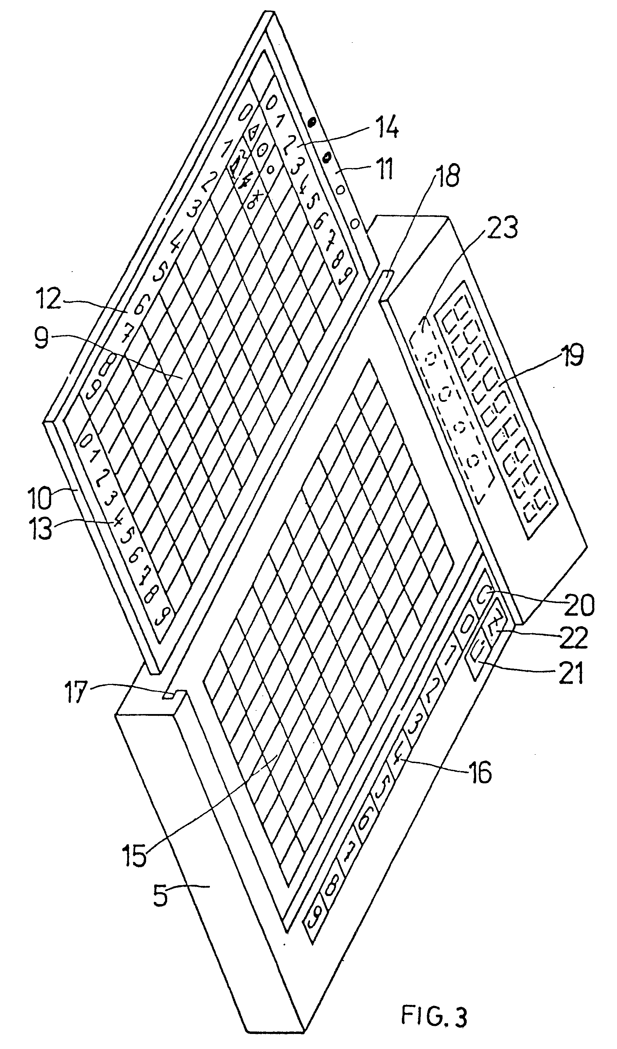

Der erfindungsgemäße mnemonische Kompilator 5 ist ein elektronisches Taschengerät zur Wandlung semantischer Informationen in Kodeworte, Fig. 3. Eine Deckfolie 10 mit festem Rahmen und einer nach mnemonischen Gesichtspunkten aufgeprägten Symbolmatrix 9, einer Kodierleiste 11, einer linken Ziffernleiste 12, einer unteren Ziffernleiste 13 und einer oberen Ziffernleiste 14 kann vermittels einer unteren Führungsnut 17 und einer oberen Führungsnut 18 über eine Tastenmatrix 15 geschoben werden, und zwar derart, daß genau immer ein Symbol über eine Taste zu liegen kommt.

Das Format der Symolmatrix 9 und der Tastenmatrix 15 ist gleich. Durch den Druck auf ein Feld der Symbolmatrix 9 und damit auf die zugehörige Taste der Tastenmatrix 15 wird ein Signal erzeugt, welches im weiteren zur Bildung eines Bestandteiles des Kodewortes dient.

Deckfolien 10 mit unterschiedlichen Symbolen werden durch unterschiedliche Aussparungen auf der Kodierleiste 11 gekennzeichnet. Ein Fotoabtaster 23 erfaßt die auf der Kodierleiste 11 angebrachte Kennzeichnung, die der Nummer der Deckfolie 10 entspricht. Über eine Zehnertastatur 16 können Ziffern eingegeben werden (z. B. Nummern von Aufnahmepunkten). Eine Korrekturtaste 20, eine Übertragungstaste 21 und ein Umschalter 22 zur Zählervoreinstellung dienen zur Auslösung bestimmter Funktionen, die nachfolgend noch beschrieben werden. Ein vollständiges Kodewort (z. B. bestehend aus: Nummer der Deckfolie 10, Nummer der gedrückten Taste der Tastenmatrix 15 und Punktnummern aufgemessener Punkte) wird in der Ziffernanzeige 19 dargestellt. Bei einer ebenfalls erfindungsgemäßen Variante des mnemonischen Kompilators können die Kodeworte auf einem in der zugehörigen Zeichnung nicht dargestellten maschinenlesbaren Datenspeicher (z. B. Festkörperspeicher) gespeichert werden. Die Ziffernleisten 12, 13 und 14 ermöglichen über den Vergleich mit den entsprechenden Stellen der Ziffernanzeige 19 eine Kontrolle für den Druck auf die richtige Taste.

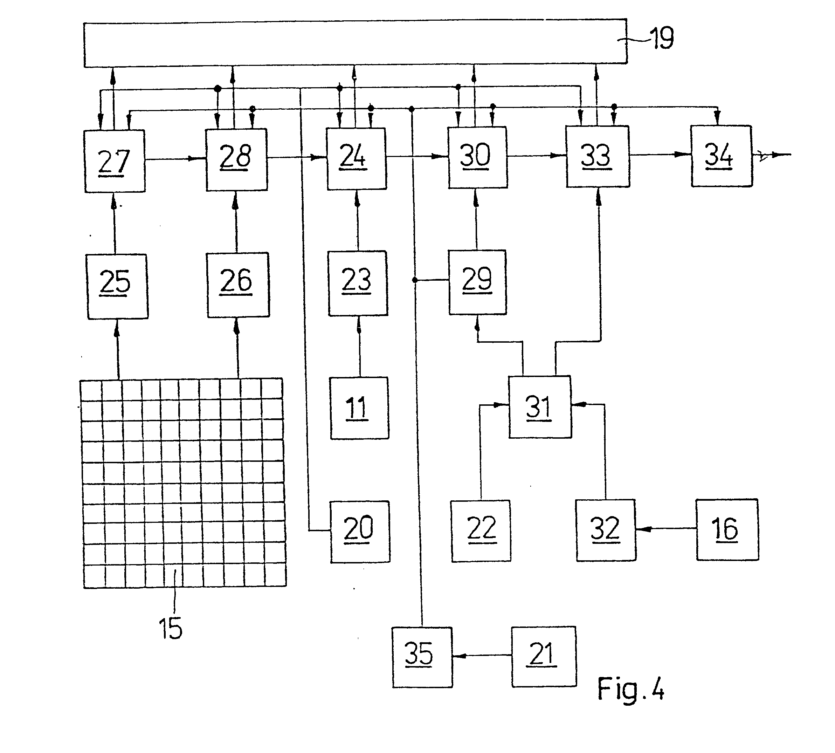

Durch den Druck auf eine Taste der Tastenmatrix 15, Fig. 4, werden Signale ausgelöst, die an einen Zeilenkodierer 25 und an einen Spaltenkodierer 26 gelangen und der Lage der Taste entsprechen. Im Zeilenkodierer 25 und Spaltenkodierer 26 werden diese Signale jeweils in einen Dualkode gewandelt und in einem Zeilenspeicher 27 bzw. in einem Spaltenspeicher 28 zwischengespeichert. Der Fotoabtaster 23 erfaßt die auf der Kodierleiste 11 aufgebrachte Kodierung und übergibt sie einem Deckfoliennummernspeicher 24. Mit Hilfe der Zehnertastatur 16 kann über einen Dezimal-Dual-Kodierer 32 und einen Zuordner 31 entweder ein Punktnummernzähler 29, z. B. mit einer dreistelligen Punktnummer, voreingestellt oder ein zweiter Punktnummernspeicher 33 belegt werden. Der Umschalter 22 zur Zählervoreinstellung steuert den Zurodner 31, dessen Zustand festlegt, ob der Dezimal-Dual-Kodierer 32 dem Punktnummernzähler 29 oder dem zweiten Punktnummernspeicher 33 zugeordnet ist. Der Inhalt des Punktnummernzählers 29 wird in einem ersten Punktnummernspeicher 30 zwischengespeichert. Der Inhalt aller Speicher wird in der Ziffernanzeige 19 angezeigt. Die Löschung aller Speicher zwecks Korrektur erfolgt über die Korrekturtaste 20. Eine erste Taktzentrale 35 steuert die serielle Ausgabe des Inhaltes aller Speicher, das entspricht der Ausgabe eines Kodewortes. Dieses Kodewort wird mittels eines ersten Modulators 34 in eine Folge impulslängenmodulierter Niederfrequenzsignale umgewandelt und an das zweite Funksprechgerät 6 zum Senden übertragen. Die erste Taktzentrale 35 wird durch Drücken der Übertragungstaste 21 angesteuert.

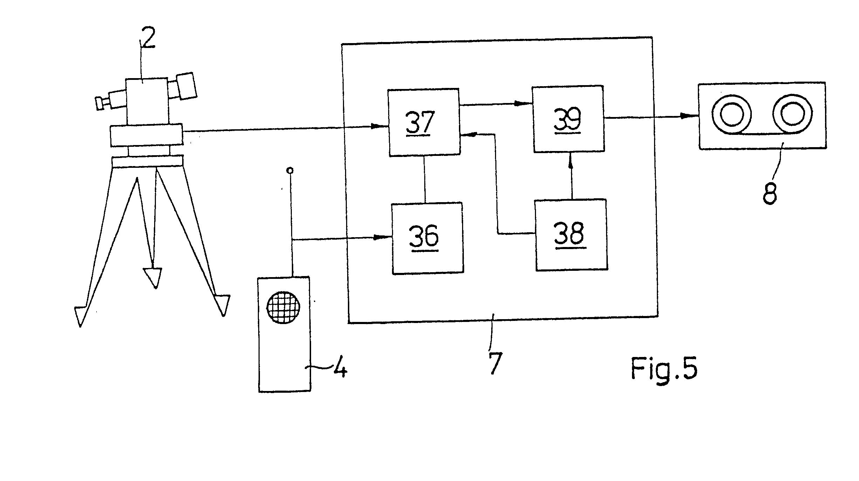

Der Informationskomplettierer 7, Fig. 5, hat die Aufgabe, die metrische und semantische Information zu einer Information zusammenzufügen. Vom elektronischen Tachymeter 2 aus wird die metrische Information auf dazu vorgesehene Plätze eines Zwischenspeichers 37 gebracht. Die vom ersten Funksprechgerät 4 kommende semantische Information wird in einem Demodulator 36 demoduliert und ebenfalls zwischengespeichert. Wenn der Zwischenspeicher 37 vollbelegt ist, das entspricht der Speicherung eines kompletten Datensatzes, erfolgt über eine zweite Taktzentrale 38 die serielle Ausgabe des Datensatzes. Dieser Datensatz wird mittels eines zweiten Modulators 39 in eine Folge impulslängenmodulierter Niederfrequenzsignale umgewandelt und an den Datenspeicher 8 zwecks Speicherung auf maschinenlesbaren Datenträger übertragen.

Eine dritte nicht dargestellte Meßanordnung kann aus einem elektronischen Tachymeter 2 mit einer Vorrichtung zur maschinenlesbaren Meßwertspeicherung und einem erfindungsgemäßen mnemonischen Kompilator 5 für semantische Informationen bestehen. Bei dieser Meßanordnung besitzt der mnemonische Kompilator 5 einen Speicher (z. B. Festkörperspeicher), in dem die Kodeworte nacheinander so abgespeichert werden, daß sie als maschinenlesbare Daten z. B. auf einer Datenverarbeitungsanlage oder einem Kartierautomaten verwendet und mit den metrischen Informationen der Tachymetermessung verknüpft werden können. Eine Datenfernübertragung wie bei der ersten und zweiten Meßanordnung entfällt also, so daß eine Sofortauswertung der metrischen und semantischen Informationen auch nicht möglich ist.

Zwecks Kontrolle und Datensicherung können natürlich auch bei den ersten beiden Meßanordnungen alle Kodeworte (digitalisierte semantische Informationen) im mnemonischen Kompilator 5 gespeichert werden.

**Patentansprüche**

1. Anordnung zur Geländevermessung mit einem elektronischen Tachymeter (2), einem Informationsanalysator (3) zur Aufbereitung der im Tachymeter (2) gewonnenen Meßwerte und einer Sende/Empfangseinrichtung (4) zur Weitergabe der aufbereiteten Meßwerte an einen Datenspeicher (1) oder einem Informationskomplettierer (7) zur Aufbereitung und Weitergabe der aufbereiteten Meßwerte an einen Datenspeicher (1) gekennzeichnet dadurch, daß zur Eingabe von semantischen Informationen ein mobiler mnemonischer Kompilator (5) vorgesehen ist, daß der mobile mnemonische Kompilator (5) einen Zwischenspeicher (27–30), eine Ziffernanzeige (19), eine auswechselbare Symbolmatrix (9), eine Tastenmatrix (15) und eine Zehnertastatur (16) enthält und daß die Symbolmatrix (9) und die Tastenmatrix (15) das gleiche Format aufweisen und so zueinander angeordnet sind, daß jedem Symbol der Symbolmatrix (9) eine entsprechende Taste der Tastenmatrix (16) zugeordnet ist.

2. Anordnung nach Anspruch 1, gekennzeichnet dadurch, daß jede auswechselbare Symbolmatrix (9) durch eine vom Kompilator (5) lesbare Kodierung gekennzeichnet ist.

3. Anordnung nach Anspruch 1, gekennzeichnet dadurch, daß der mobile mnemonische Kompilator (5) die Form eines tragbaren Taschengerätes besitzt.

## Claims

1. Arrangement for land-surveying having an electronic tachymeter (2), a data analyzer (3) for processing the measurements obtained in the tachymeter (2), and a transceiver apparatus (4) for relaying the processed measurements to a memory (1) or a data supplementer (7) for processing and relaying the processed measurements to a memory (1), characterized in that a mobile mnemonic compiler (5) is privided for the input of semantic data, that the mobile mnemonic compiler (5) contains a temporary store (27—30), a digital disply (19), an exchangeable symbol matrix (9), a key matrix (15), and a decimal keyboard (16), and that the symbol matrix (9) and the key matrix (15) have the same format and are so disposed with respect to one another that with each symbol of the symbol matrix (9), a corresponding key of the key matrix (15) is associated.

2. Arrangement according to claim 1, characterized in that each exchangeable symbol matrix (9) is identified by a coding readable by the compiler (5).

3. Arrangement according to claim 1, characterized in that the mobile mnemonic compiler (5) has the form of a portable pocket instrument.

## Revendications

1. Système de mesure topographique comprenant un tachéomètre électronique (2), un analyseur d'informations (3) pour le traitement des valeurs de mesure obtenues par le tachéomètre (2) et un dispositif émetteur-recepteur (4) pour la transmission des valeurs de mesure traitées, à une mémoire (1) ou à un appareil (7) capable de compléter des informations et destiné à traiter et transmettre les valeurs de mesure à une mémoire (1), caractérisé en ce qu'il est prévu un compilateur mnémonique mobile (5) capable de recevoir des informations sous forme sématique, en ce que le dit compilateur mnémonique mobile (5) comporte une mémoire intermédiaire (27—30), un dispositif d'affichage à chiffres (19), une matrice de symboles échangeable (9), un tableau de touches (15) et une rangée de dix touches (16) et en ce que la matrice de symboles (9) et le tableau de touches (15) présentent le même format et sont adaptés l'un à l'autre de manière que chaque symbole de la matrice de symboles (9) soit attribué à une touche correspondante du tableau de touches (15).

2. Système selon la revendication 1, caractérisé en ce que chacune des matrices de symboles échangeables (9) est identifiée par une marque de codage susceptible d'être lue par le compilateur (5).

3. Système selon la revendication 1, caractérisé en ce que le compilateur mnémonique mobile (5) présente la forme d'un appareil de poche, portatif.

Fig. 1

FIG. 2

7

0 028 581

FIG. 3

9

Fig.4

0 028 581

Fig.5